# EUROPEAN PATENT SPECIFICATION

(11) **EP 1 192 071 B1**
(45) Date of publication and mention of the grant of the patent: **14.11.2007**
(21) Application number: 00930606.9
(22) Date of filing: 11.05.2000
(51) Int. Cl.: B60T 17/08

(54) **SERVICE BRAKE ACTUATOR HAVING A UNITARY PUSHROD ASSEMBLY WITH A BUSHING THEREFOR**
BREMSBETÄTIGER MIT STÖSSELSTANGENEINHEIT UND DURCHFÜHRUNG
ACTIONNEUR DE FREIN A PIED DOTE D'UN ENSEMBLE DE TIGE POUSSOIR MONOBLOC ASSOCIE A UNE GARNITURE D'ETANCHEITE

(30) Priority: 07.06.1999 US 137882 P
(43) Date of publication of application: 03.04.2002
(73) Proprietor: Haldex Brake Corporation, Kansas City, MO 64153-1297 (US)
(72) Inventor: ROY, James, F., Muskegon, MI 49442 (US)
(74) Representative: Rehberg Hüppe + Partner
(86) International application number: PCT/US2000/012919
(87) International publication number: WO 2000/074991

(56) References cited:
- DE-A- 3 603 145
- DE-A- 3 935 663

## Description

### Background of the Invention

### Field of the Invention

This invention relates to an improvement in a service brake actuator for air-operated vehicle brakes; and, more particularly, to a service brake actuator having a unitary pushrod assembly with a separable bushing capable of being assembled about the pushrod for sealing the pushrod with respect to the service brake actuator.

### Related Art

Air-operated brake actuators are well known in the vehicle industry, especially in the heavy-duty truck industry where the air-operated brake actuators are controlled by a source of pressurized air to apply the operational brakes and emergency brakes of the heavy-duty truck and/or trailer. A typical air-operated brake actuator comprises a spring brake actuator in combination with a service brake actuator. The service brake actuator comprises a housing that is divided into a pressure chamber and a pushrod chamber in which is disposed one portion of a pushrod assembly.

The pushrod assembly includes a pressure plate mounted on one end of the pushrod and adapted to abut the diaphragm. A clevis is mounted to the other end of the pushrod and is adapted to connect to a brake lever. The reciprocation of the pushrod with respect to the housing moves the brake lever to apply or release the brakes, depending on the direction of movement. Pressurized air is introduced into the service brake pressure chamber to move the position of the diaphragm and thereby reciprocate the pushrod assembly, resulting in the application or release of the brake, depending on the amount of air introduced or exhausted from the service brake pressure chamber.

The spring brake actuator has a similar construction to that of the service brake actuator in that it typically includes a diaphragm dividing the spring brake actuator into a spring chamber and a pressure chamber. A large force compression spring is housed within the spring chamber between the housing and the diaphragm and is typically separated from the diaphragm by a pressure plate in abutting relationship with the diaphragm. An actuating rod extends from the pressure plate through the diaphragm and into the service brake pressure chamber. The introduction of compressed air into the spring brake pressure chamber compresses the spring and withdraws the actuator from contact with the service brake diaphragm. When it is desired to apply the parking brakes or the emergency brakes, the pressurized air is exhausted from the spring brake pressure chamber whereby the large force compression spring expands, bringing the actuator into contact with the diaphragm to extend the pushrod from the service brake actuator and apply the brakes.

In prior service brake actuators, such as that disclosed in U.S. Patent No. 5,002,164, issued March 26, 1991, which is incorporated by reference, the pushrod and the clevis of the pushrod assembly are typically assembled after the pushrod has been inserted through an opening in the service brake actuator housing by threading a tapped opening of the clevis onto a threaded end of the pushrod and fixing the relative position of the clevis and pushrod by one or more lock nuts or the clevis was welded to pushrod end. A bushing encircled the pushrod and sealed the pushrod relative to the housing opening through which the pushrod reciprocated. The bushing included a body sized to fit within the service brake opening and a flange sized to abut the service brake housing. A pushrod opening extended through the body. The return spring bore against the bushing to bias the bushing against the service brake housing.

In the prior art, the clevis could not be mounted onto the end of the pushrod prior to the insertion of the pushrod through the housing because the clevis is too large to pass through pushrod opening in the bushing, although it is small enough to pass through the housing opening.

Given the high volume and great price competitiveness of the air-operated brake actuator marketplace, there is a continuous desire to simplify the manufacture and assembly of the air-operated brake actuators. To that end, there is a desire to manufacture and/or assemble the pushrod assembly into a unitary element prior to installation of the pushrod assembly, preventing the use of the current bushing.

DE 39 35 663 A1 shows an air-operated brake actuator with a first fluid pressure chamber and a second fluid pressure chamber wherein one chamber is spanned by a diaphragm. The diaphragm is connected to a piston welded to a pushrod holding a clevis at the end opposite to the piston. The pushrod is supported by the diaphragm and the elastic bellow wherein the bellow is closed in circumferential direction. One axial end of the bellow is fixed to the pushrod whereas the other axial end of the bellow is fixed to the housing of the chamber associated with the piston. During axial movement of the pushrod the bellow is expanded in axial direction. The pushrod does not comprise any exact guidance in radial direction with respect to the housing.

DE 36 03 145 A1 discloses an air-operated break actuator comprising only one chamber wherein the chamber is spanned by a diaphragm cooperating with a piston connected to a pushrod. The housing comprises an opening. A screw divided in a mid plain into two parts is screwed into the housing in the area of the opening. The screw comprises a radial flange serving as an end stop for an end position of the pushrod.

### SUMMARY OF THE INVENTION

The invention relates to an air-operated brake actuator for applying and releasing a brake comprising a housing having first and second portion portions between which is positioned a diaphragm, dividing the interior of the housing into a pushrod chamber and a pressure chamber. The housing second portion has a pushrod opening that extends between the pushrod chamber and the exterior of the housing. A pushrod comprising a shaft having first and second ends, a pressure plate mounted on the first end of the shaft, and a coupling mounted on the second end of the shaft, is mounted within the pushrod chamber such that the pressure plate lies within the pressure chamber, the shaft extends through the pushrod opening, and the coupling is located exteriorly of the second portion. The coupling has a maximum dimension sized to permit passage through the pushrod opening. A bushing encircles the shaft and is positioned within the pushrod opening. The bushing comprises a body sized to be received within the pushrod opening and a shaft opening in the body for receiving the shaft. The bushing has at least one separable portion that enables radial access to the shaft opening, thereby permitting the assembly of the bushing to the shaft after the clevis and pressure plate are mounted to the shaft.

Preferably, the shaft opening maximum dimension is sized to prohibit the passage of the coupling therethrough. The bushing can comprise two arcuate portions which when assembled form the body with an outer circumferential portion received within the pushrod opening and an inner circumferential portion forming the shaft opening. Each arcuate portion can terminate in opposing end portions, with one end portion having a key and the other end portion having a keyhole sized to receive the key to couple together the arcuate portions. The arcuate portions can further include a flange extending beyond the body and which abuts the interior of the housing second portion when the body is received within the pushrod opening.

In another aspect, the invention relates to a method of assembling an air operated brake actuator comprising a housing having an first portion and a second portion, with a pushrod opening in the second portion. A diaphragm spans the housing dividing the housing into a pushrod chamber and a pressure chamber. A pushrod is partially received within the pushrod chamber. The pushrod comprises a shaft, a pressure plate mounted on one end of the shaft, and a coupling mounted on another end of the shaft. The coupling has a maximum dimension sized to permit passage through the pushrod opening. A bushing having a body sized to be received within the pushrod opening and a shaft opening in the body. The bushing comprises at least one portion that is separable from the bushing a sufficient amount to permit the radial insertion of the shaft into the shaft opening.

The method comprising the steps inserting the coupling through the pushrod opening, separating the seperable portion from the bushing to form a radial passage to the pushrod opening, inserting the shaft into the shaft opening through the radial opening, positioning the body in the actuator opening, positioning the diaphragm between the first and second housing portions, and securing the first and second housing portions together.

Preferably, the step of inserting of the shaft into the shaft opening precedes the insertion of the coupling through the pushrod opening. The separable portion is then assembled to the body. The assembly of the separable body portion includes inserting a key on each of the parts into a corresponding keyhole on another part.

### BRIEF DESCRIPTION OF THE DRAWINGS

In the drawings:
FIG. I is a sectional view of the combination spring brake actuator and service brake actuator including unitary pushrod assembly in combination with the bushing according to the invention;
FIG. 2 is an assembly view of the service brake actuator of FIG. 1;
FIG. 3 is a perspective view of the pushrod assembly of FIG. 1;
FIG. 4 is a perspective view of the bushing of FIG. 1;
FIG. 5 is a perspective view of a second embodiment of the bushing according to the invention; and
FIG. 6 is a perspective view of a third embodiment of the bushing according to the invention.

### DETAILED DESCRIPTION

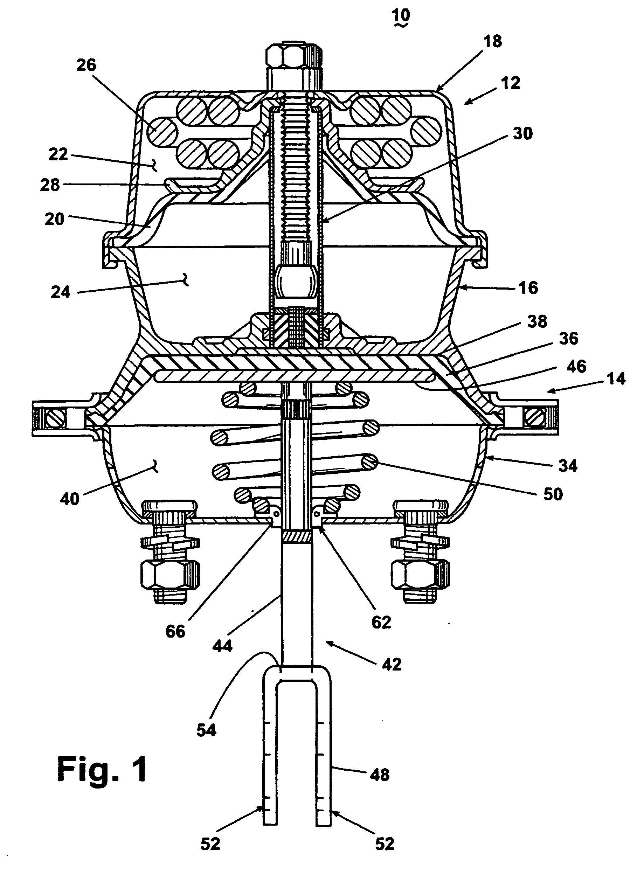

FIG. 1 illustrates an air-operated brake actuator 10 comprising a spring brake actuator 12 in combination with a service brake actuator 14. In the particular structure shown in FIG. 1, the spring brake actuator 12 and service brake actuator 14 both share a common adapter housing 16, which forms a portion of the housing for each of the spring brake actuator 12 and the service brake actuator 14.

The spring brake actuator 12 further comprises a cup-shaped head 18 that connects to the adapter housing 16 to form the housing for the spring brake actuator. A diaphragm 20 is trapped between the joined edges of the head and the adapter housing 16 to divide the spring brake actuator 12 into a spring chamber 22 and a pressure chamber 24.

A large force compression spring 26 is disposed within the spring chamber 22 between the head 18 and a pressure plate 28 abutting the diaphragm 20. The pressure plate 28 mounts a hollow actuator rod 30, which extends through the diaphragm 20 and into the upper portion of the service brake actuator 14.

The pressure chamber 24 is fluidly connected to a source of compressed air (not shown). The introduction of the compressed air into the pressure chamber 24 moves the diaphragm 20 and pressure plate 28 upwardly to compress or cage the large force compression spring 26 against the head. When the large force compression spring 26 is caged, the actuator rod 30 is withdrawn to its uppermost position with respect to the service brake actuator 14. When the pressurized air in the pressure chamber 24 is exhausted, the actuator rod 30 extends its greatest distance into the service brake actuator 14.

The service brake actuator 14 comprises a housing 16 formed by a cup-shaped bottom housing 34 that is connected to the adapter housing 16. A diaphragm 36 is trapped between the joined edges of the bottom housing 34 and the adapter housing 16 to divide the service brake actuator 14 into a pressure chamber 38 and a pushrod chamber 40. The pressure chamber 38 is connected to a source of compressed air (not shown) and operates in a similar manner as described above with respect to the spring brake actuator pressure chamber 24.

A pushrod assembly 42 is partially disposed within the pushrod chamber. The pushrod assembly comprises a shaft 44 having one end mounted to a pressure plate 46 and a clevis 48 welded to the other end of the shaft 44.

A return spring 50 is disposed between the bottom housing 34 and the pressure plate 46 to urge the pushrod assembly 42 toward the dividing wall of the adapter housing 16. A bushing 62 is positioned within an opening in the bottom housing 34 and receives the shaft 44 through a shaft opening 64 to seal the pushrod chamber with respect to the shaft 44 while providing a bearing surface for the reciprocating movement of the shaft 44 during normal operation. The return spring 50 biases the bushing 62 into contact with the bottom housing 34.

The clevis 48 has a generally U-shaped cross section and comprises opposing fingers 52 connected by a bight portion 54. A pair of openings 56, 58 are provided in each of the fingers 52 for use in connecting the clevis 48 to the lever of a brake system, such as an S-cam brake assembly. The end of the shaft 44 abuts and is welded to the bight portion 54 of the clevis 48. The clevis 48 and shaft 44 extend through a pushrod opening 60 in the bottom housing 34.

The bushing 62 has a body 68 in which is defined the axially oriented shaft opening 64. An annular shoulder 70 extends from the bushing body 68 and is greater in diameter than the bottom housing opening 34. The body 68 is effectively divided by the shoulder 70 so that the housing side 72 of the body 68 has a greater diameter than the pushrod chamber side 74. Also, the shaft opening 64 is tapered at the pushrod chamber side 74 so as not to provide a sharp edge within the stroke path of the shaft 44.

The bushing 62 is formed from two pieces, which are generally illustrated as arcuate segments 66, preferably half a circle, which terminate in ends 76. A protrusion or key 78 extends from the ends of each of the bushing halves. A blind opening or keyhole 80 extends into the opposite end of each half so that the key 78 of one half is received within the keyhole 80 of the other half to fix the relative positions of the two halves when assembled.

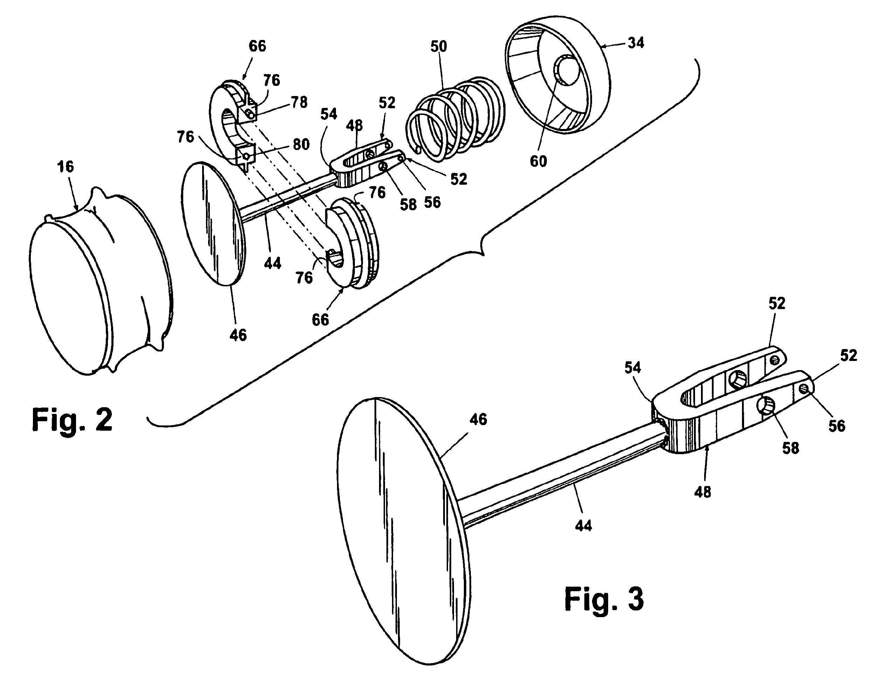

Referring to FIG. 2. the service brake actuator 14 is assembled by sliding the clevis 48 and shaft of the unitary pushrod assembly through the coil return spring 50 and inserting the shaft 44 and clevis 48 through the bottom housing opening 34 until the clevis 48 extends through the bottom housing 34. In this position, the two halves 66 of the bushing 62 are positioned on opposite sides of the shaft 44 and pressed together until the keys 78 are received in the corresponding keyhole 80. The separability of the two halves effectively permits the shaft to be inserted radially into the shaft opening. The housing side of the bushing 62 is inserted within the bushing opening. The pushrod assembly 42 is drawn towards the bottom housing 34 to effectively cage the spring and remove the pressure plate 46 from interfering with the positioning of the diaphragm 36 between the adapter housing 16 and the bottom housing 34, which are clamped together with the peripheral edge of the diaphragm held therebetween to complete the assembly.

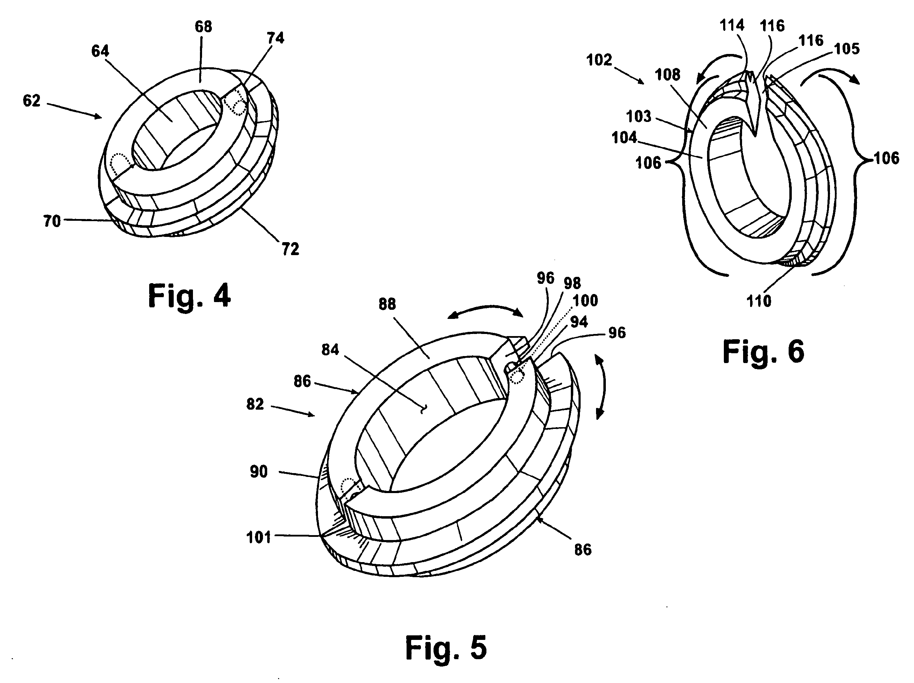

FIG. 5 illustrates a second embodiment bushing 82 that is substantially similar to the bushing 62 in that the bushing 82 comprises arcuate portions 86, which, when assembled form a body 88 having an annular shoulder 90 and an axial shaft opening 84. The main difference between the second embodiment bushing 82 and first embodiment bushing 62 is that the arcuate portions 86 are connected by a hinge 101, permitting the separation of the arcuate portions 86 by pivoting the arcuate portions relative to the hinge 101. The hinge is preferably a living hinge integrally formed with the arcuate portions but could be any other suitable structure, including a mechanical connection such as tape. In the preferred form, the hinge 101 is a living hinge extending between adjacent portions of the annular shoulder. The ends of the arcuate portions opposite the hinge include a key 98 and a keyhole 100, respectively.

The separability of the arcuate portions 86 of the bushing 82 permit the bushing to be assembled about the shaft 44 after the pressure plate 46 and clevis 48 are mounted to the shaft. The assembly of the bushing to the shaft merely requires the arcuate portions 86 to be rotated about the hinge 101 until the arcuate portions are separated a sufficient distance that the shaft 44 can be radially inserted into the pushrod shaft opening 84 of the bushing 82. The arcuate portions 86 are then rotated toward each other until the key 98 is received within the keyhole 100. With the bushing now assembled around the shaft 44, the bushing 82 can be slid along the shaft 44 until it is positioned within the shaft opening 60.

FIG. 6 illustrates a third embodiment bushing 102 that is substantially similar to the bushings 62, 82 in that the bushing 102 comprises a body having defining a shaft opening. The main difference between the third embodiment bushing 82 and first and second embodiment bushings is that the body 108 is not formed by physically distinct arcuate portions, but is formed by a ring 103 having a slit 105 defined by opposing end surfaces 116. The ring can be thought of as having two conceptual arcuate portions 106 with one of their ends permanently connected and the other end being formed by the end surfaces 116. The end surfaces 116 are preferably oriented at an angle relative to the axis of the shaft opening 104. Thus, when the bushing 102 is assembled, the return spring will bias the end surfaces 116 together to seal the slit 105 and prevent the ingress contaminates into the pushrod chamber.

To assemble the bushing about the shaft of the pushrod, the arcuate portions are grasped near the end surfaces and moved axially in opposite directions, as indicated by the direction arrows in FIG. 6, separating the ends a sufficient distance for the shaft 44 to be radially received between the end surfaces and into the shaft opening. Once the shaft 44 is inserted, the end surfaces 116 are released and the inherently resiliency of the bushing 102, which is preferably made of Delrin, results in the end surfaces returning substantially to their undeflected postion. To the extent the end surfaces 116 do not completely return to their undeflected position, the force of the return spring 50 is sufficient to bias the end surfaces into contact when the brake is assembled.

One of many alternatives to the above-described assembly is that the bushing can be assembled to the shaft after the insertion of the shaft and clevis through the return spring but before the insertion of the clevis through the bushing opening.

Regardless of the point at which the bushing is assembled to the unitary pushrod assembly, the invention reduces the number of steps involved in assembling the service brake actuator by permitting the installation of a unitary pushrod assembly because of the multi-piece structure of the bushing. The simplification of the service brake actuator assembly advantageously reduces the complexity of the pushrod assembly in that it is no longer needed since the clevis can now be fixedly secured to the shaft, preferably by welding, instead of removably secured as found in the prior art service brake actuators, reducing the part count. The cumulative advantages associated with the multi-piece bushing results in a service brake actuator having reduced part count and a quicker assembly time, both of which provide a competitive advantage.

While the invention has been specifically described in connection with certain specific embodiments thereof, it is to be understood that this is by way of illustration and not of limitation, and the scope of the appended claims should be construed as broadly as the prior art will permit.

## Claims

1. An air-operated brake actuator for applying and releasing a brake, the brake actuator comprising:
a housing having a first portion (16) and a second portion (34), with an pushrod opening (60) in the second portion (34);
a diaphragm (36) spanning the housing and dividing the interior of the housing into a pushrod chamber (40) and pressure chamber (38) for receiving and exhausting pressurized fluid to apply and release the brakes;
a pushrod (42) comprising a shaft (44) having first and second ends, a pressure plate (46) mounted on the first end of the shaft (44), and a coupling (48) mounted on the second end of the shaft (44), the pressure plate (46) being located within the pressure chamber (38), the shaft (44) extending through the pushrod opening (60), and the coupling (48) located exteriorly of the second portion (34) and having a maximum dimension sized to permit passage through the pushrod opening (60); **characterized by**
a bushing (62) defining a body (68) sized to be received within the pushrod opening (60) and a shaft opening (64) in the body (68) for receiving the shaft (44) and comprising at least one portion (66) that is separable from another portion of the bushing (62) to enable radial access to the shaft opening (64), enabling the assembly of the bushing (62) to the shaft (44) after the coupling (48) and pressure plate (46) are mounted to the shaft (44).

2. The air-operated brake actuator according to claim 1, wherein the shaft opening maximum dimension is sized to prohibit the passage of the coupling.

3. The air-operated brake actuator according to claim 2, wherein the coupling is a clevis (48).

4. The air-operated brake actuator according to claim 3, wherein the clevis (48) is U-shaped and comprises parallel sides connected by a bight portion (54), which is connected to the end of the shaft.

5. The air-operated brake actuator (10) according to claim 1. wherein the bushing comprises two arcuate portions (62), which when assembled form the body (68) with an outer circumferential portion received within the pushrod opening and an inner circumferential portion forming the shaft opening.

6. The air-operated brake actuator according to claim 5, wherein each arcuate portion terminates in opposing end portions, with one end portion having a key (78) and the other end portion having a keyhole (80) sized to received the key (78), wherein, when the arcuate portions are assembled, the end portions abut and the key (78) of one arcuate portion is received within the keyhole (80) of the other arcuate portion to couple together the arcuate portions.

7. The air-operated brake actuator according to claim 5, wherein each arcuate portion includes a flange (70) extending beyond the body (68) and which abuts the interior of the housing second portion when the body (68) portion is received within the pushrod opening.

8. The air-operated brake actuator according to claim 7, wherein the flange (70) is an arcuate lip, which forms an annular lip when the arcuate portions are assembled.

9. The air-operated brake actuator according to claim 7, wherein each arcuate portion further comprises an arcuate projection, which forms an annular projection (74) that functions as a spring seat and lies within the housing when the brake is assembled.

10. The air-operated brake actuator according to claim 1, wherein the bushing (62) further comprises a flange abutting the interior of the housing second portion when the bushing (62) is mounted to the housing.

11. The air-operated brake actuator according to claim 10, wherein the flange is an annular lip.

12. The air-operated brake actuator according to claim 10, wherein the bushing (62) further comprises a spring seat that lies (74, 70) within the housing when the bushing (62) is mounted to the housing.

13. The air-operated brake actuator according to claim 5, wherein the arcuate portions (86) are connected by a hinge (101) permitting the separation of the arcuate portions (86) by pivoting the arcuate portions relative to the hinge (101).

14. The air-operated brake actuator according to claim 7, wherein flange (70) has a larger diameter than the bottom housing opening and the bushing (62) with flange (70) is biased into contact with the bottom housing (34) by return spring (50).

15. The air operated brake actuator according to claim 1, wherein the body is formed by a ring (103) having a slit (105) defining opposing end surfaces (116) and the shaft (44) is radially received between the end surfaces (116) when the end surfaces (116) are in a position axially moved in opposite directions.

16. The air-operated brake actuator according to claim 15, wherein the end surfaces (116) are oriented at an angle relative to the axis of the shaft opening (104).

17. The air-operated brake actuator of claim 1, wherein the bushing is formed from two pieces which terminate in ends (76), a protrusion or key (78) extending from the ends of each of the two pieces and a blind opening or keyhole (80) extending into the opposite end of each half, so that the key (78) of one piece is received within the keyhole (80) of the other piece to fix the relative positions of the two halfs when assembled.

18. A method of assembling an air operated brake actuator comprising a housing having a first portion (16) and a second portion (34), with a pushrod opening (60) in the second portion (34), a diaphragm (36) spanning the housing, a pushrod comprising a shaft (44), a pressure plate (46) mounted on one end of the shaft (44), and a coupling (48) mounted on another end of the shaft (44), with the coupling (48) having a maximum dimension sized to permit passage through the pushrod opening (60); and a bushing (62) defining a body (68) sized to be received within the pushrod opening (60) and a shaft opening (64) in the body (68), bushing (62) comprising at least one portion (62) that is separable from another portion of the bushing (62) a sufficient amount to permit the radial insertion of the shaft into the shaft opening (84), the method comprising:
inserting the coupling (48) through the pushrod opening (60);
separating the separable portion from the other portion of the bushing to form a radial passage to the shaft opening (60);
inserting the shaft (44) into the shaft opening (60) through the radial passage;
positioning the body (68) in the pushrod opening (60).

19. The method of claim 18, wherein the step of positioning the body (68) in the pushrod opening (60) is followed by
positioning the diaphragm between the first and second housing portions (16; 34); and
securing the first and second housing portions (16, 34) together.

20. The method of claim 19 wherein the assembling of the inserting of the shaft into the shaft opening precedes the insertion of the coupling through the pushrod opening.

21. The method of claim 19, wherein the step of positioning the body (68) in the pushrod opening includes sliding the body (68) along the shaft and into the pushrod opening.

22. The method of claim 21, wherein the sliding of the body (68) includes sliding the body (68) along the shaft and into the pushrod opening until a flange (70) on the body (68) contacts the second housing portion.

23. The method of claim 19, further comprising assembling the separable portion with the body.

24. The method of claim 23, wherein assembling of the separable portion and the body includes inserting a key (78) on each of the parts into a corresponding keyhole (80) on another part.

## Patentansprüche

1. Druckluftbetätigter Bremsaktuator zum Betätigen und Lösen einer Bremse, wobei der Bremsaktuator aufweist:
ein Gehäuse mit einem ersten Bereich (16) und einem zweiten Bereich (34), wobei in dem zweiten Bereich (34) eine Stößelöffnung (60) vorgesehen ist;
eine Membran (36), die das Gehäuse überspannt und das Innere des Gehäuses in eine Stößelkammer (40) und eine Druckkammer (38) zur Aufnahme und Freigabe eines druckbeaufschlagten Fluides zur Betätigung und Freigabe der Bremsen unterteilt;
einen Stößel (42) mit einer Welle (44) mit einem ersten und einem zweiten Ende, einer Druckplatte (46), die mit dem ersten Ende der Welle (44) montiert ist oder an dieser befestigt ist, und einer Kopplung (48) die mit dem zweiten Ende der Welle (44) montiert ist oder an dieser befestigt ist, wobei die Druckplatte (46) in der Druckkammer (38) angeordnet ist und sich die Welle (44) durch die Stößelöffnung (60) erstreckt und die Kopplung (48) außerhalb des zweiten Bereichs (34) angeordnet ist und eine maximale Dimension aufweist, die geeignet bemessen ist, um einen Durchtritt durch die Stößelöffnung (60) zu ermöglichen, **dadurch gekennzeichnet, dass**
ein Lager oder eine Buchse (62) einen Körper (68) aufweist, der geeignet bemessen ist, um in der Stößelöffnung (60) aufgenommen zu werden, und eine Wellenöffnung (64) in dem Körper (68) vorgesehen ist zur Aufnahme der Welle (44) und dass zumindest ein Bereich (66) vorgesehen ist, der von einem anderen Bereich des Lagers (62) separierbar ist, um einen radialen Zugang zu der Wellenöffnung (64) zu ermöglichen, wodurch ein Zusammenbau oder die Montage des Lagers (62) mit der Welle (44) ermöglicht ist, nachdem die Kopplung und die Druckplatte (46) mit der Welle (44) montiert sind oder an dieser befestigt sind.

2. Bremsaktuator nach Anspruch 1, **dadurch gekennzeichnet, dass** die maximale Dimension der Wellenöffnung geeignet bemessen ist, um einen Durchtritt der Kopplung zu verhindern.

3. Bremsaktuator nach Anspruch 2, **dadurch gekennzeichnet, dass** die Kopplung ein Gabelkopf (48) ist.

4. Bremsaktuator nach Anspruch 3 **dadurch gekennzeichnet, dass** der Gabelkopf (48) U-förmig ausgebildet ist und parallele Seiten aufweist, die über einen gekrümmten Bereich (54) verbunden sind, der mit dem Ende der Welle verbunden ist.

5. Bremsaktuator (10) nach Anspruch 1, **dadurch gekennzeichnet, dass** das Lager zwei kreissegmentförmige Bereiche (62) aufweist, die in zusammengebautem Zustand den Körper (68) bilden mit einem äußeren Umfangsbereich, der in der Stößelöffnung aufgenommen ist, und einem inneren Umfangsbereich, welcher die Wellenöffnung bildet.

6. Bremsaktuator nach Anspruch 5, **dadurch gekennzeichnet, dass** jeder kreissegmentförmige Bereich in gegenüberliegenden Endbereichen endet, wobei ein Endbereich ein Schlüsselelement oder Verbindungselement (78) aufweist und der andere Endbereich ein Schlüsselloch oder Gegen-Verbindungselement (80) aufweist, welches geeignet bemessen ist, um den Schlüssel oder das Verbindungselement (78) aufzunehmen, wobei in zusammengebautem Zustand der kreissegmentförmigen Bereiche die Endbereiche aneinander angrenzen und das Verbindungselement oder der Schlüssel (78) des einen kreissegmentförmigen Bereichs aufgenommen ist in dem Gegen-Verbindungselement oder dem Schlüsselloch (80) des anderen kreissegmentförmigen Bereichs zur Kopplung der kreissegmentförmigen Bereiche miteinander.

7. Bremsaktuator nach Anspruch 5, **dadurch gekennzeichnet, dass** jeder kreissegmentförmige Bereich einen Flansch (70) aufweist, der sich über den Körper (68) hinaus erstreckt und an das Innere des zweiten Bereichs des Gehäuses angrenzt, wenn der Körper (68) in der Stößelöffnung aufgenommen ist.

8. Bremsaktuator nach Anspruch 7, **dadurch gekennzeichnet, dass** der Flansch (70) eine kreissegmentförmige Lippe ist, die eine ringförmige Lippe bildet, wenn die kreissegementförmigen Bereiche zusammengebaut sind.

9. Bremsaktuator nach Anspruch 7, **dadurch gekennzeichnet, dass** jeder kreissegmentförmige Bereich weiterhin einen kreissegmentförmigen Vorsprung aufweist, der einen ringförmigen Vorsprung (74) bildet, der als Sitz für eine Feder dient und in dem Gehäuse angeordnet ist, wenn die Bremse zusammengebaut ist.

10. Bremsaktuator nach Anspruch 1, **dadurch gekennzeichnet, dass** das Lager (62) weiterhin eine Flansch aufweist, der an das Innere des zweiten Bereiches des Gehäuses angrenzt, wenn das Lager (62) mit dem Gehäuse montiert ist oder wird.

11. Bremsaktuator nach Anspruch 10, **dadurch gekennzeichnet, dass** der Flansch eine ringförmige Lippe ist.

12. Bremsaktuator nach Anspruch 10, **dadurch gekennzeichnet, dass** das Lager (62) weiterhin einen Sitz für eine Feder aufweist, welcher in dem Gehäuse liegt, wenn das Lager (62) mit dem Gehäuse montiert ist.

13. Bremsaktuator nach Anspruch 5, **dadurch gekennzeichnet, dass** die kreissegmentförmigen Bereiche (86) über ein Scharnier (101) verbunden sind, welches die Trennung der kreissegmentförmigen Bereiche (86) durch Verschwenkung der kreissegmentförmigen Bereiche relativ zu dem Scharnier (101) ermöglicht.

14. Bremsaktuator nach Anspruch 7, **dadurch gekennzeichnet, dass** der Flansch (70) einen größeren Durchmesser besitzt als die Öffnung des Gehäusebodens und das Lager (62) mit dem Flansch (70) in Kontakt mit dem Gehäuseboden (34) durch die Rückführfeder (50) beaufschlagt ist.

15. Bremsaktuator nach Anspruch 1, **dadurch gekennzeichnet, dass** der Körper mit oder durch einen Ring (103) mit einem Schlitz (105) gebildet ist, der gegenüberliegende endseitige Oberflächen (116) definiert, und dass die Welle (44) radial zwischen den endseitigen Oberflächen (116) aufgenommen wird, wenn die endseitigen Oberflächen (116) sich in einer axial in entgegengesetzte Richtungen bewegten Position befinden.

16. Bremsaktuator nach Anspruch 15, **dadurch gekennzeichnet, dass** die endseitigen Oberflächen (116) unter einem Winkel relativ zu der Achse der Wellenöffnung (104) orientiert sind.

17. Bremsaktuator nach Anspruch 1, **dadurch gekennzeichnet, dass** das Lager aus oder mit zwei Stücken oder Elementen gebildet ist, die in Enden (76) enden, wobei sich ein Fortsatz, Verbindungselement oder Schlüssel (78) von den Enden von jedem der beiden Elemente erstreckt und eine blinde Öffnung, ein Schlüsselloch oder ein Gegen-Verbindungselement (80) in das gegenüberliegende Ende von jeder Hälfte erstreckt, so dass der Schlüssel, Vorsprung oder das Verbindungselement (78) von einem Element aufgenommen ist in dem Schlüsselloch, dem Gegen-Verbindungselement oder der blinden Öffnung (80) des anderen Elementes zur Fixierung der relativen Positionen der beiden Hälften in zusammengebautem Zustand.

18. Verfahren zum Zusammenbau eines druckluftbetätigten Bremsaktuators mit einem Gehäuse mit einem ersten Bereich (16) und einem zweiten Bereich (34), mit einer Stößelöffnung (60) in dem zweiten Bereich (34), einer Membran (36), die das Gehäuse überspannt, einem Stößel mit einer Welle (44), einer Druckplatte (46), die mit einem Ende der Welle (44) montiert ist oder an dieser befestigt ist, und mit einer Kopplung (48), die mit dem anderen Ende der Welle (44) montiert ist oder an diesem befestigt ist, wobei die Kopplung (48) eine maximale Dimension aufweist, die geeignet bemessen ist, um einen Durchtritt durch die Stößelöffnung (60) zu ermöglichen, sowie mit einem Lager (62), welches einen Körper (68) definiert, der geeignet bemessen ist, um in der Stößelöffnung (60) aufgenommen zu werden, und mit einer Wellenöffnung (64) in dem Körper (68), wobei das Lager (62) zumindest einen Bereich (62) aufweist, der von einem anderen Bereich des Lagers (62) in hinreichendem Ausmaß separierbar ist, um das radiale Einsetzen der Welle in die Wellenöffnung (84) zu ermöglichen, wobei das Verfahren folgende Verfahrensschritte aufweist;
Einsetzen der Kopplung (48) durch die Stößelöffnung (60);
Separieren des separierbaren Bereichs von dem anderen Bereich des Lagers zur Bildung einer radialen Durchtrittsbahn zu der Wellenöffnung (60);
Einsetzen der Welle (44) in die Wellenöffnung (60) durch die radiale Durchtrittsbahn;
Positionieren oder Anordnen des Körpers (68) in der Stößelöffnung (60).

19. Verfahren nach Anspruch 18, **dadurch gekennzeichnet, dass** der Verfahrensschritt eines Positionierens des Körpers (68) in der Stößelöffnung (60) gefolgt ist von folgenden Verfahrensschritten
Positionieren oder Anordnen der Membran zwischen dem ersten und zweiten Gehäusebereich (16; 34);
Sichern oder Befestigen des ersten und zweiten Gehäusebereiches (16, 34) zu- oder aneinander.

20. Verfahren nach Anspruch 19, **dadurch gekennzeichnet, dass** das Zusammenbauen oder das Einsetzen der Welle in die Wellenöffnung dem Einsetzen der Kopplung durch die Stößelöffnung vorangeht.

21. Verfahren nach Anspruch 19, **dadurch gekennzeichnet, dass** der Verfahrensschritt des Positionierens des Körpers (68) in der Stößelöffnung die Verursachung einer gleitenden Bewegung des Körpers (68) entlang der Welle und in die Stößelöffnung beinhaltet.

22. Verfahren nach Anspruch 21, **dadurch gekennzeichnet, dass** das Verursachen der gleitenden Bewegung des Körpers (68) das Verursachen einer gleitenden Bewegung des Körpers (68) entlang der Welle und in die Stößelöffnung bis zum Kontaktieren eines Flansches (70) des Körpers (68) mit dem zweiten Gehäusebereich beinhaltet.

23. Verfahren nach Anspruch 19, **dadurch gekennzeichnet, dass** weiterhin der Verfahrensschritt eines Zusammenbauens des separierbaren Bereichs mit dem Körper vorgesehen ist.

24. Verfahren nach Anspruch 23, **dadurch gekennzeichnet, dass** das Zusammenbauen des separierbaren Bereichs und des Körpers das Einsetzen eines Schlüssels oder Verbindungselementes (78) an jedem der Teile in ein korrespondierendes Schlüsselloch oder Gegen-Verbindungselement (80) an dem anderen Teil beinhaltet.

## Revendications

1. Actionneur de frein pneumatique pour actionner et relâcher un frein, l'actionneur de frein comprenant :
un logement présentant une première partie (16) et une seconde partie (34), une ouverture de tige de poussée (60) étant disposée dans la seconde partie (34) ;
un diaphragme (36) fractionnant le logement et divisant l'intérieur du logement en une chambre de tige de poussée (40) et une chambre de pression (38) pour recevoir et évacuer un fluide comprimé afin d'actionner ou de relâcher les freins ;
une tige de poussée (42) comprenant un arbre (44) possédant une première et une seconde extrémités, une plaque de pression (46) montée sur la première extrémité de l'arbre (44), et un dispositif d'accouplement (48) monté sur la seconde extrémité de l'arbre (44), la plaque de pression (46) étant située à l'intérieur de la chambre de pression (38), l'arbre (44) s'étendant à travers l'ouverture de tige de poussée (60), et le dispositif d'accouplement (48) étant situé à l'extérieur de la seconde partie (34) et possédant une dimension maximale adaptée pour permettre le passage à travers l'ouverture de tige de poussée (60) ; **caractérisé par**
une douille (62) définissant un corps (68) dont la taille est adaptée pour être reçu à l'intérieur de l'ouverture de tige de poussée (60) et une ouverture d'arbre (64) dans le corps (68) pour recevoir l'arbre (44) et comprenant au moins une partie (66) qui peut être séparée d'une autre partie de la douille (62) afin de permettre un accès radial à l'ouverture d'arbre (64), permettant l'assemblage de la douille (62) à l'arbre (44) après que le dispositif d'accouplement (48) et la plaque de pression (46) ont été montés sur l'arbre (44).

2. Actionneur de frein pneumatique selon la revendication 1, dans lequel la dimension maximale de l'ouverture d'arbre est adaptée pour empêcher le passage du dispositif d'accouplement.

3. Actionneur de frein pneumatique selon la revendication 2, dans lequel le dispositif d'accouplement est un maillon de jonction (48).

4. Actionneur de frein pneumatique selon la revendication 3, dans lequel le maillon de jonction (48) est en forme de U et comprend des côtés parallèles reliés par une partie en forme d'anse (54), qui est reliée à l'extrémité de l'arbre.

5. Actionneur de frein pneumatique (10) selon la revendication 1, dans lequel la douille comprend deux parties courbes (62), qui lorsqu'elles sont assemblées forment le corps (68) dont une partie circonférentielle externe est reçue à l'intérieur de l'ouverture de tige de poussée et une partie circonférentielle interne forme l'ouverture d'arbre.

6. Actionneur de frein pneumatique selon la revendication 5, dans lequel chaque partie courbe se termine en parties terminales opposées, une partie terminale possédant une clavette (78) et l'autre partie terminale possédant une boutonnière (80) dont la taille est adaptée pour recevoir la clavette (78), dans lequel, lorsque les parties courbes sont assemblées, les parties terminales viennent buter l'une contre l'autre et la clavette (78) d'une partie courbe est reçue à l'intérieur de la boutonnière (80) de l'autre partie courbe afin de coupler les parties courbes.

7. Actionneur de frein pneumatique selon la revendication 5, dans lequel chaque partie courbe comprend une bride (70) s'étendant au-delà du corps (68) et qui vient buter sur l'intérieur de la seconde partie du logement lorsque la partie du corps (68) est reçue à l'intérieur de l'ouverture de tige de poussée.

8. Actionneur de frein pneumatique selon la revendication 7, dans lequel la bride (70) est une lèvre courbe, qui forme une lèvre annulaire lorsque les parties courbes sont assemblées.

9. Actionneur de frein pneumatique selon la revendication 7, dans lequel chaque partie courbe comprend en outre une saillie courbe, qui forme une saillie annulaire (74) qui sert de siège de ressort et repose à l'intérieur du logement lorsque le frein est assemblé.

10. Actionneur de frein pneumatique selon la revendication 1, dans lequel la douille (62) comprend en outre une bride qui vient buter sur l'intérieur de la seconde partie du logement lorsque la douille (62) est montée sur le logement.

11. Actionneur de frein pneumatique selon la revendication 10, dans lequel la bride est une lèvre annulaire.

12. Actionneur de frein pneumatique selon la revendication 10, dans lequel la douille (62) comprend en outre un siège de ressort qui repose (74, 70) à l'intérieur du logement lorsque la douille (62) est montée sur le logement.

13. Actionneur de frein pneumatique selon la revendication 5, dans lequel les parties courbes (86) sont reliées par une articulation (101) permettant la séparation des parties courbes (86) en pivotant les parties courbes relativement à l'articulation (101).

14. Actionneur de frein pneumatique selon la revendication 7, dans lequel la bride (70) présente un diamètre plus important que l'ouverture du logement inférieur et la douille (62) dotée d'une bride (70) est amenée en contact avec le logement inférieur (34) par le ressort de rappel (50).

15. Actionneur de frein pneumatique selon la revendication 1, dans lequel le corps est formé par un anneau (103) possédant une fente (105) définissant des surfaces terminales opposées (116) et l'arbre (44) est reçu radialement entre les surfaces terminales (116) lorsque les surfaces terminales (116) sont dans une position déplacée axialement dans des directions opposées.

16. Actionneur de frein pneumatique selon la revendication 15, dans lequel les surfaces terminales (116) sont orientées selon un angle par rapport à l'axe de l'ouverture d'arbre (104).

17. Actionneur de frein pneumatique selon la revendication 1, dans lequel la douille est formée à partir de deux pièces qui se terminent par des extrémités (76), une saillie ou clavette (78) s'étendant depuis les extrémités de chacune des deux pièces et une ouverture borgne ou boutonnière (80) s'étendant dans l'extrémité opposée de chaque moitié, de sorte que la clavette (78) d'une pièce est reçue à l'intérieur de la boutonnière (80) de l'autre pièce afin de fixer les positions relatives des deux moitiés lorsqu'elles sont assemblées.

18. Procédé pour assembler un actionneur de frein pneumatique comprenant un logement possédant une première partie (16) et une seconde partie (34), avec une ouverture de tige de poussée (60) dans la seconde partie (34), un diaphragme (36) fractionnant le logement, une tige de poussée comprenant un arbre (44), une plaque de pression (46) montée sur une extrémité de l'arbre (44), et un dispositif d'accouplement (48) monté sur une autre extrémité de l'arbre (44), le dispositif d'accouplement (48) possédant une dimension maximale adaptée pour permettre le passage à travers l'ouverture de tige de poussée (60) ; et une douille (62) définissant un corps (68) dont la taille est adaptée pour être reçu à l'intérieur de l'ouverture de tige de poussée (60) et une ouverture d'arbre (64) dans le corps (68), la douille (62) comprenant au moins une partie (62) qui peut être suffisamment séparée d'une autre partie de la douille (62) pour permettre l'insertion radiale de l'arbre dans l'ouverture d'arbre (84), le procédé comprenant les étapes consistant à :
insérer le dispositif d'accouplement (48) à travers l'ouverture de tige de poussée (60) ;
séparer la partie qui peut être séparée de l'autre partie de la douille afin de former un passage radial vers l'ouverture d'arbre (60) ;
insérer l'arbre (44) dans l'ouverture d'arbre (60) à travers le passage radial ;
positionner le corps (68) dans l'ouverture de tige de poussée (60).

19. Procédé selon la revendication 18, dans lequel l'étape consistant à positionner le corps (68) dans l'ouverture de tige de poussée (60) est suivie des étapes consistant à :
positionner le diaphragme entre les première et seconde parties du logement (16, 34) ; et
fixer ensemble les première et seconde parties du logement (16, 34).

20. Procédé selon la revendication 19, dans lequel l'assemblage de l'insertion de l'arbre dans l'ouverture d'arbre précède l'insertion du dispositif d'accouplement à travers l'ouverture de tige de poussée.

21. Procédé selon la revendication 19, dans lequel l'étape consistant à positionner le corps (68) dans l'ouverture de tige de poussée comprend l'étape consistant à faire glisser le corps (68) le long de l'arbre et dans l'ouverture de tige de poussée.

22. Procédé selon la revendication 21, dans lequel l'étape consistant à faire glisser le corps (68) comprend l'étape consistant à faire glisser le corps (68) le long de l'arbre et dans l'ouverture de tige de poussée jusqu'à ce qu'une bride (70) sur le corps (68) entre en contact avec la seconde partie du logement.

23. Procédé selon la revendication 19, comprenant en outre l'assemblage de la partie pouvant être séparée et du corps.

24. Procédé selon la revendication 23, dans lequel l'assemblage de la partie pouvant être séparée et du corps comprend l'insertion d'une clavette (78) sur chacune des parties dans une boutonnière correspondante (80) sur l'autre partie.
